# EUROPÄISCHE PATENTSCHRIFT

(11) **EP 0 857 888 B1**
(45) Veröffentlichungstag und Bekanntmachung des Hinweises auf die Patenterteilung: **04.12.2002**
(21) Anmeldenummer: 98100777.6
(22) Anmeldetag: 17.01.1998
(51) Int. Cl.: F16G 13/06

(54) **Endlosklippe, insbesondere für Folienreckanlagen**
Endless clip device, particularly for sheet stretching devices
Dispositif sans fin de pincement, en particulier pour installations d'étirage de feuilles

(30) Priorität: 08.02.1997 DE 19704827
(43) Veröffentlichungstag der Anmeldung: 12.08.1998
(73) Patentinhaber: LINDAUER DORNIER GESELLSCHAFT M.B.H, 88129 Lindau (DE)
(72) Erfinder: Kerner, Horst, Dipl.-Ing. (FH), 88161 Lindenberg (DE); Maierhofer, Hans-Jürgen, 88131 Lindau (DE); Bosch, Werner, 87459 Pfronten-Ried (DE)

(56) Entgegenhaltungen:
- EP-A- 0 119 898
- EP-A- 0 214 948
- DE-A- 3 333 938
- DE-B- 1 039 319
- DE-U- 9 404 546
- FR-A- 998 484
- US-A- 4 355 502
- US-A- 4 926 529

## Beschreibung

Die Erfindung betrifft eine Endloskluppenkette, insbesondere für Folienreckanlagen, in denen thermoplastische Folien wenigstens biaxial gereckt werden.

Aus der Literatur ist eine Vielzahl von Kettengliedgestaltungen für Transportketten in Spannmaschinen bekannt.
Derartige Ketten bestehen aus einer Vielzahl von Kettengliedern, wobei jedes Kettenglied aus einer ersten und einer zweiten Außenlasche sowie einer ersten und einer zweiten Innenlasche mit einem die Außen- und Innenlaschen verbindenden Kettenbolzen besteht, aus einer zwischen den Innenlaschen eingeordneten Hülse, die den Kettenbolzen umschließt und aus einer auf der Hülse aufgesetzten Rolle. Gemäß der bekannten Ausführungen sind zwischen Kettenbolzen und Hülse sowie zwischen Hülse und Rolle Lagerbuchsen aus einem elastischen, abriebfesten Werkstoff mit einer glatten Offenfläche eingesetzt.
Derarkige Kettenglieder und Transportketten mit diesen Kettengliedern sind z.B. bekannt aus DE-AS 1 039 319 (Ruberg & Renner), DE-OS 33 33 938 (Brückner-Trockentechnik GmbH), EP 0 214 948 (INTERCOM), US 4,926,529 (Marshall and Williams Company).

Nachteil dieser Kettenglieder-Ausführungen ist, daß jedes Innenkettenglied aus separaten Innenlaschen und einer separaten, die Innenlaschen miteinander verbindenden Hülse besteht. Ein solches Kettenglied erfordert einen relativ hohen Bearbeitungs- und Montageaufwand zur Herstellung der Gelenkverbindungen einer Komplettkette.

Aus der EP 0 119 898 (Campague des Transmissions...) ist eine Transportkette bekannt, in der jedes Innenkettenglied aus zwei einstückigen Laschen mit jeweils einem an ihren Endbereichen vorhandenen, rohrförmigen Lagerzapfen besteht.
Zwischen einem Kettenbolzen und jedem Lagerzapfen sowie zwischen jedem Lagerzapfen und einer Rolle ist jeweils eine Lagerbuchse angeordnet.

Bekannt ist aus der FR 998 484 A1 eine aus Innen- und Außenkettengliedern bestehende Kette z.B. für Zweiradfahrzeuge. Die Innenkettenglieder bestehen aus einer ersten Innenlasche mit einem an den Laschenendbereichen vorhandenen Lagerzapfen gleicher Länge. Die freien Enden der Lagerzapfen sind zur formschlüssigen Verbindung mit einer zweiten Innenlasche entsprechend gestaltet.

Vorbekannt sind des weiteren aus einem Stück bestehende Innenkettenglieder einer Spannkluppenkette.
Diese Kettenglieder sind als Feingußteil hergestellt und bedürfen keiner mechanischen Nachbearbeitung.
Derartige Kettenglieder haben jedoch erhebliche Nachteile. Diese bestehen unter anderem darin, daß die Achsabstände der Lagerhülsen zur Aufnahme der Gelenkbolzen variieren. Die Folge ist, daß ein exakter Eingriff des in die Innenkettglieder eingreifenden Antriebszahnrades für den Antrieb der Kluppenkette nicht gewährleistet ist. Das führt zu vorzeitigem Verschleiß sowohl der Innenkettenglieder als auch der Verzahnung des Antriebsrades.
Zur Aufrechterhaltung der Betriebssicherheit einer mit solchen Innenkettengliedern ausgerüsteten Kluppenkette ist es erforderlich, die Kettenglieder im Hinblick auf eventuell vorhandene Lunker, die im Gießprozeß entstehen können, zu röntgen; das ist kostenaufwendig.
Von Nachteil ist ferner, daß bei zunehmender Kettengeschwindigkeit die Laufruhe der Kette nicht mehr gegeben ist.

Aufgabe der Erfindung ist es, für eine Endloskluppenkette Ketteninnenglieder zu schaffen, bei denen die Toleranzen der Achsabstände zwischen den Gelenk- oder Kettenbolzen auf ein vertretbares Minimum reduziert werden und die als Rollenkettenglieder ausgebildet werden können.

Die Aufgabe wird erfindungsgemäß durch die kennzeichnenden Merkmale des Patentanspruchs 1 gelöst.

Erfindungswesentlich gemäß Anspruch 1 ist, dass ein Lagerzapfen der ersten Innenlasche und ein Lagerzapfen der zweiten Innenlasche im Bereich seines freien Endes auf einer Länge H einen, vergleichsweise zum Innendurchmesser D2 der die Lagerzapfen vertikal durchdringenden Bohrung, größeren Innendurchmesser D2' aufweist und dass der andere Lagerzapfen der zweiten Innenlasche und der andere Lagerzapfen der ersten Innenlasche im Bereich seines freien Endes auf einer Länger H einen, vergleichsweise zum Außendurchmesser D1 der Lagerzapfen, kleineren Außendurchmesser D1' aufweist, wobei die Lagerzapfen eine Zentrierung für die erste und zweite Innenlasche ausbilden.
Jede Zentrierung ist eine Passung, bei der der Innendurchmesser D2' eine Bohrung mit etwa der Qualität H7 und der Außendurchmesser D1' eine Welle mit etwa der Qualität f8 ist.

In weiterer Ausgestaltung der Erfindung ist jede Innenlasche vorzugsweise ein Gesenkschmiedeteil, an welchem die Lagerzapfen der ersten und der zweiten Innenlaschen jeweils ein Paar von Lagerzapfen gleicher Dimension ausbilden. Des weiteren können die Paare von Lagerzapfen eine gleiche Länge aufweisen oder von ungleicher Länge sein.

Durch das Gesenkschmieden wird ein homogenes Materialgefüge und ein ungestörter, d.h. nicht unterbrochener, Materialfaserverlauf in den Schmiedeteilen erzielt.
Damit sind höhere Zugfestigkeitseigenschaften gegeben.
Durch eine mechanische Bearbeitung des Außenumfangs der Lagerzapfen kann auf dem Lagerzapfen eine Lagerbuchse für eine Rolle aufgenommen werden.
Durch eine mechanische Innenbearbeitung der Lagerzapfen, die eine die Gelenkbolzen durchgreifende Lagerbuchse aufnehmen, können die Achsabstände der Gelenkbolzen in zulässigen Toleranzen gehalten werden.

Mit der erfindungsgemäßen Lösung wird in vorteilhafter Weise erreicht, daß in einer Endloskluppenkette mit Spannmitteln, in der die erfindungsgemäß ausgebildeten Innenkettenglieder Verwendung finden, auf Außenlaschen bzw. Außenkettenglieder verzichtet werden kann, weil die Rollteile der Spannmittel die Funktion der Außenlaschen übernehmen können.

Durch mechanische Bearbeitung von Bereichen der freien Enden der Lagerzapfen wird eine Zentrierung für beide Laschenteile geschaffen, was insbesondere ein leichtes Montieren der inneren und äußeren Lagerbuchse ermöglicht.

Die Erfindung wird nachstehend an einem Ausführungsbeispiel näher erläutert.

Es zeigen:
- Figur 1: eine erste und zweite Lasche mit Lagerzapfen einheitlicher Zapfenlänge;
- Figur 2: eine erste und zweite Lasche mit Lagerzapfen unterschiedlicher Zapfenlänge;
- Figur 3: eine Teildarstellung der ersten und zweiten Lasche, wobei die Lagerzapfen ein Zentriermittel aufweisen;
- Figur 4: eine Teildarstellung eines komplettierten Rollenkettengliedes;
- Figur 5: einen Schnitt gemäß der Linie B-B durch die Teildarstellung nach Figur 4;
- Figur 6: einen Längenabschnitt einer Endloskluppenkette mit Spannkluppen in Schnittdarstellung.

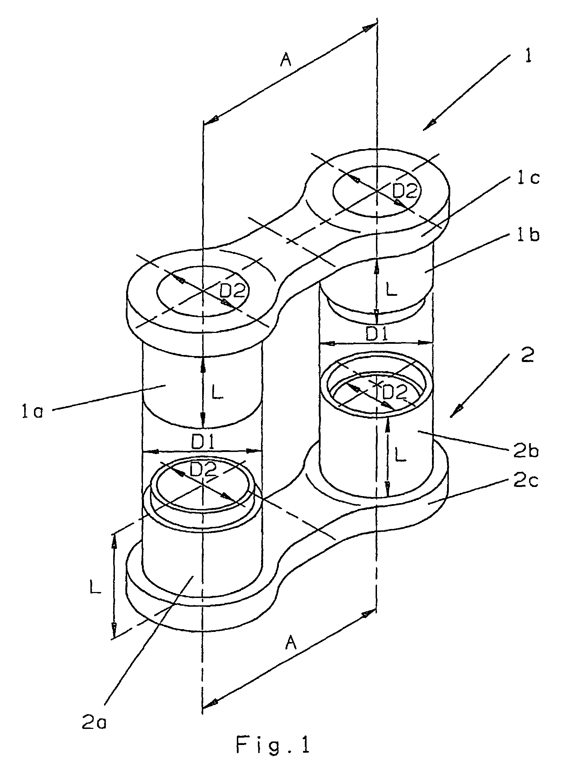

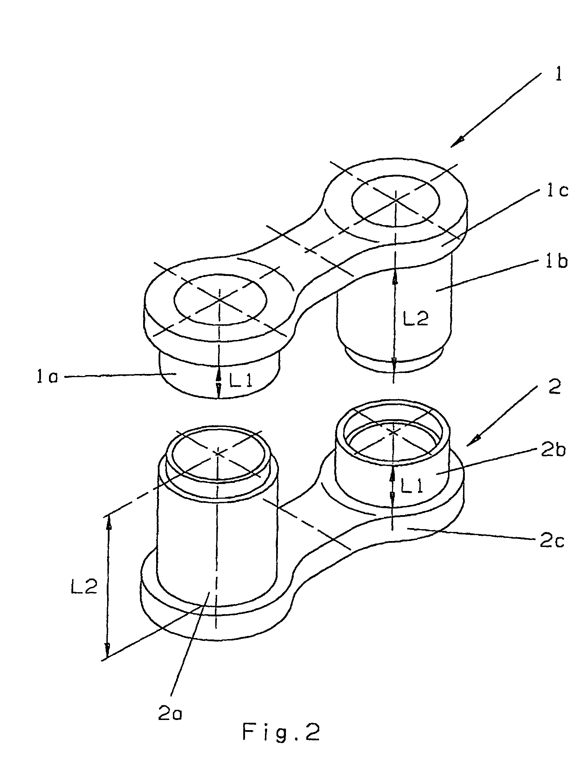

Die Figuren 1 und 2 zeigen erste und zweite Laschen 1,2 für ein Rollenkettenglied, so wie es nach dem Gesenkschmieden oder Metallgießen entsteht.
Die Lasche 1 ist identisch gestaltet zur Lasche 2.
Der Unterschied zwischen den in Figur 1 dargestellten Laschen 1,2 und den in Figur 2 dargestellten Laschen 1,2 besteht lediglich darin, daß in Figur 1 die Lagerzapfen 1a,1b;2a,2b der Laschen 1,2 für ein Kettenglied gleich lang sind, während in Figur 2 die Lagerzapfen 1a,1b;2a,2b beider Laschen 1,2 ungleich lang sind.
Die Angaben bezüglich der Durchmesser D1 und D2 an den Lagerzapfen 1a bis 2b und bezüglich der Achsabstände A sind für alle dargestellten Laschen im wesentlichen gleich.
Im wesentlichen heißt hier, daß geringfügige Abweichungen bei den Achsabständen vorhanden sein können, weil alle Angaben ein Aufmaß in Bezug auf das Fertigmaß beinhalten.

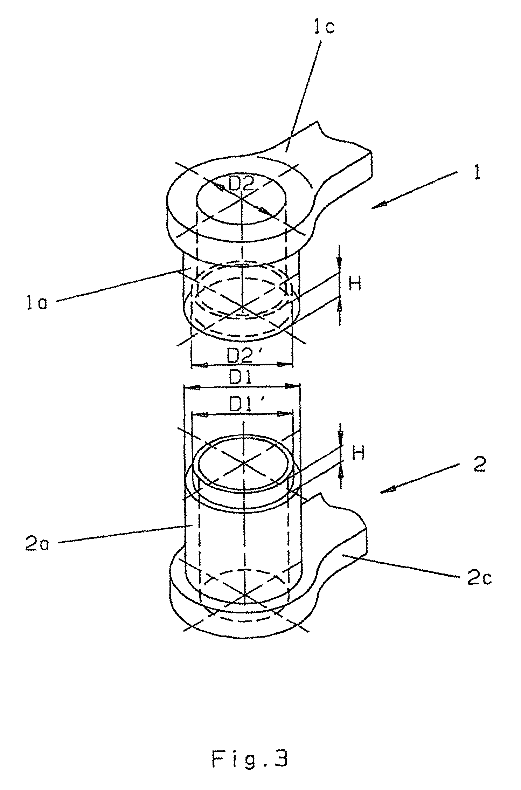

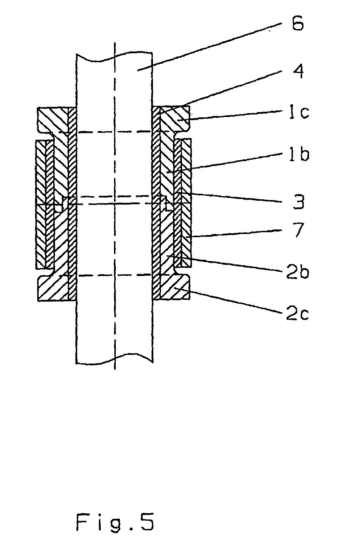

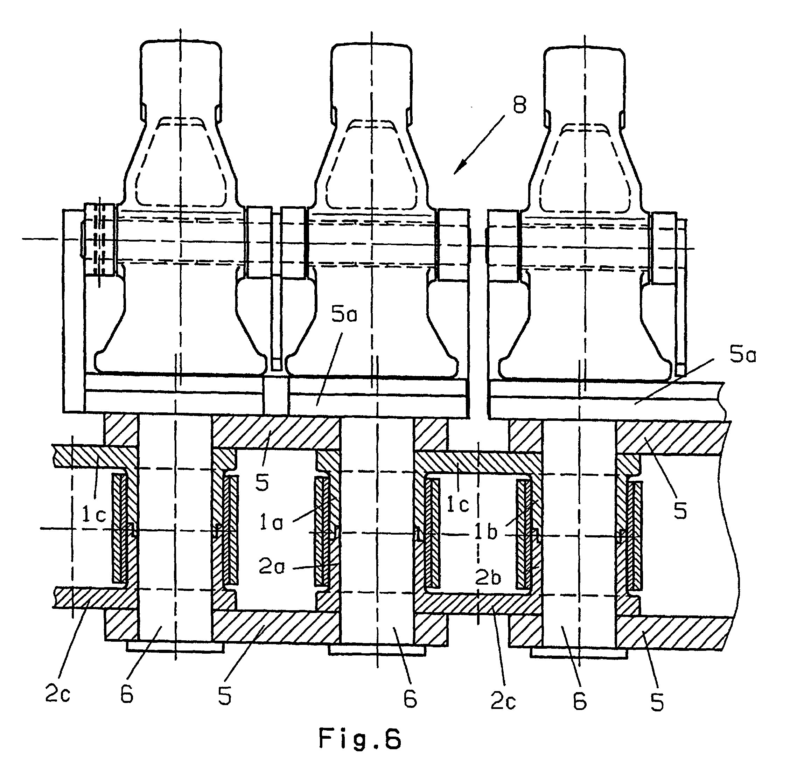

Figur 3 zeigt eine Teildarstellung der ersten und zweiten Lasche, wie diese durch mechanische Bearbeitung aus den in Figur 1 und 2 dargestellten Laschenteilen 1,2 entstehen. Die Lagerzapfen 1a,1b, die an dem jeweiligen Endabschnitt der Laschenplatte 1c ansetzen und die Lagerzapfen 2a,2b, die an dem jeweiligen Endbereich der Laschenplatte 2c ansetzen, besitzen eine Durchgangsbohrung mit dem Durchmesser D2. Die Durchgangsbohrung D2 wird von einem Kettenbolzen 6 durchgriffen, siehe auch Figur 5 und 6.
Das freie Ende der Lagerzapfen 1a,2b ist auf der Länge H als Bohrung im Sinne einer Passung mit dem Durchmesser D2' ausgebildet, wobei die Bohrung eine Passungsqualität von wenigstens H7 aufweist.
Die Lagerzapfen 1a,1b der Lasche 1 und die Lagerzapfen 2a,2b der Lasche 2 besitzen ein und denselben Außendurchmesser D1.
Das freie Ende der Lagerzapfen 2a,1b weist auf der Länge H eine gegenüber dem Außendurchmesser D1 verringerten Durchmesser D1' auf und bildet damit eine Welle im Sinne einer Passung aus, die eine Passungsqualität von wenigstens f8 besitzt.

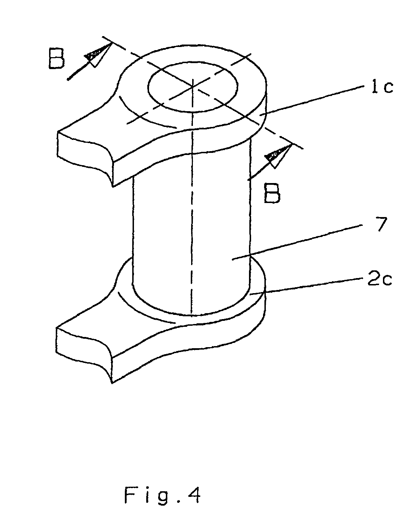

Figur 4 zeigt eine Teildarstellung eines aus den Laschen 1,2 bestehenden Rollenkettengliedes im montierten Zustand mit der Rolle 7.
Die Rolle 7 umschließt, wie in Figur 5 dargestellt, eine auf dem Außendurchmesser der Lagerzapfen 1a,1b;2a,2b montierte Lagerbuchse 3.
Die Bohrungen in den Laschen 1,2 mit dem Durchmesser D2 nehmen eine Lagerbuchse 4 auf, die den Kettenbolzen 6 umschließt.

Figur 6 zeigt einen Abschnitt einer Endloskluppenkette 8, insbesondere für Spannmittel, z.B. Spannkluppen in Folienreckmaschinen. Die Spannmittel bestehen, wie an sich bekannt, z.B. aus einem Rollteil 5 und einem Spannteil 5a. Das Spannteil 5a ist andeutungsweise dargestellt, ebenso das Rollteil 5.
Wichtig ist, daß bei einer Endloskluppenkette 8 für Spannkluppen 5,5a, die aus den erfindungsgemäß ausgebildeten Rollenkettengliedern besteht, die Rollteile 5 die Funktion von üblicherweise vorhandenen äußeren Kettenlaschen übernehmen.

Die in Figur 6 einander benachbarten Spannkluppen besitzen ein Rollteil 5, in das ein erstes und ein zweites Rollenkettenglied eingreift, wobei jedes Rollenkettenglied mittels eines Kettenbolzens 6 mit dem Rollteil 5 verbunden ist.

### ZEICHNUNGS-LEGENDE

- 01: Lasche
- 01a: Lagerzapfen
- 01b: Lagerzapfen
- 01c: Laschenplatte
- 02: Lasche
- 02a: Lagerzapfen
- 02b: Lagerzapfen
- 02c: Laschenplatte
- 03: Lagerbuchse
- 04: Lagerbuchse
- 05: Rollteil
- 05a: Spannmittel
- 06: Kettenbolzen
- 07: Rolle
- 08: Transportkette

- D1: Außendurchmesser
- D1': Außendurchmesser
- D2: Innendurchmesser
- D2': Innendurchmesser
- L1: Länge
- L2: Länge
- H: Länge

¹ Presumably in error for 1b
² Presumably in error for 1
³ Presumably in error for 2a
⁴ Presumably in error for 2 -translator

## Patentansprüche

1. Endloskluppenkette, insbesondere für Folienreckmaschinen, bestehend aus einer Aufeinanderfolge einer Vielzahl von Spannkluppen, die aus jeweils einem Rollteil (5) und aus wenigstens einem mit dem Rollteil (5) verbundenen Spannteil (5a) bestehen, und wobei jedes Rollteil (5) ein Paar von Außenlaschen bildet, mit einem in jedem Rollteil (5) vorhandenen ersten und zweiten Kettenbolzen (6), mit wenigstens einer jeden Kettenbolzen (6) umschließenden Lagerbuchse (4), auf der paarweise Innenlaschen (1,2) angeordnet sind, wobei jedes Rollenkettenglied aus einer ersten einstückig ausgebildeten Innenlasche (1) und einer zweiten einstückig ausgebildeten Innenlasche (2) besteht, wobei beide Innenlaschen an den Laschen-Endbereichen jeweils einen rohrförmig ausgebildeten Lagerzapfen (1a,1b;2a,2b) aufweisen, wobei die Lagerzapfen (1a,1b) der ersten Innenlasche (1) mit den Lagerzapfen (2a,2b) der zweiten Innenlasche (2) stirnseitig miteinander in Verbindung stehen, und wobei die rohrförmigen Lagerzapfen (1a,1b;2a,2b) der ersten und zweiten Innenlasche (1,2) auf ihrem Außenumfang eine Lagerbuchse (3) zur drehbeweglichen Aufnahme einer Rolle (7) aufnehmen, **dadurch gekennzeichnet, dass** ein Lagerzapfen (1a) der ersten Innenlasche (1) und ein Lagerzapfen (2b) der zweiten Innenlasche (2) im Bereich seines freien Endes auf einer Länge H einen, vergleichsweise zum Innendurchmesser (D2) der den Lagerzapfen (1a,1b;2a,2b) vertikal durchdringenden Bohrung, größeren Innendurchmesser (D2') aufweist und dass der andere Lagerzapfen (2a) der ersten Innenlasche (2) und der andere Lagerzapfen (1b) der zweiten Innenlasche (1) im Bereich seines freien Endes auf der Länge H einen, vergleichsweise zum Außendurchmesser (D1) des Lagerzapfens (2a,1b), kleineren Außendurchmesser (D1') aufweist, wobei der eine Lagerzapfen (1a,2a) mit dem anderen Lagerzapfen (1b,2b) jeweils eine Zentrierung für die erste und die zweite Innenlasche (1,2) ausbilden und wobei die Zentrierung eine Passung ist, bei der der Innendurchmesser (D2') eine Bohrung mit etwa der Qualität H7 und der Außendurchmesser (D1') eine Welle mit etwa der Qualität f8 ist.

2. Endloskluppenkette nach Anspruch 1, **dadurch gekennzeichnet, daß** die Lagerzapfen (1a,1b;2a,2b) der ersten und zweiten Lasche (1,2) jeweils ein Paar von Lagerzapfen gleicher Dimension bilden.

3. Endloskluppenkette nach Anspruch 1, **dadurch gekennzeichnet, daß** die Lagerzapfen (1a,1b;2a,2b) der Paare von Lagerzapfen eine gleiche Länge (L) aufweisen.

4. Endloskluppenkette nach Anspruch 1, **dadurch gekennzeichnet, daß** die Lagerzapfen (1a,1b;2a,2b) der ersten und zweiten Lasche Lagerzapfen ungleicher Länge (L1,L2) sind.

5. Endloskluppenkette nach Anspruch 1, **dadurch gekennzeichnet, daß** jede Innenlasche (1,2) ein Gesenkschmiedeteil ist.

6. Endloskluppenkette nach Anspruch 1, **dadurch gekennzeichnet, daß** jede Innenlasche (1,2) ein Gussteil ist.

## Claims

1. Endless clip chain, especially for sheet stretching machines, consisting of a succession of a plurality of stenter clips that each consist of a roll part (5) and of at least one clamping part (5a) connected to the roll part (5), and wherein each roll part (5) forms a pair of outer link plates, having a first and second chain stud (6) in each roll part (5), having at least one bearing bush (4) surrounding each chain stud (6), on which bearing bush are arranged inner link plates (2) in pairs, wherein each roller chain link consists of a first one-piece inner link plate (1) and a second one-piece inner link plate (2), wherein both inner link plates have a tubular bearing pin (1a, 1b; 2a, 2b) at each link plate end region, wherein the bearing pins (1a, 1b) of the first inner link plate (1) are in end-face connection with the bearing pins (2a, 2b) of the second inner link plate (2), and wherein on their outer circumference the tubular bearing pins (1a, 1b; 2a, 2b) of the first and second inner link plates (1, 2) receive a bearing bush (3) for rotatably receiving a roller (7), **characterised in that,** in the region of its free end over a length H, one bearing pin (1a) of the first inner link plate (1) and one bearing pin (2b) of the second inner link plate (2) each has a larger diameter (D2') compared with the inner diameter (D2) of the bore penetrating vertically through the bearing pin (1a, 1b; 2a, 2b), and **in that**, in the region of its free end over the length H, the other bearing pin (2a)¹ of the first inner link plate (2)² and the other bearing pin (1b)³ of the second inner link plate (1)⁴ each has a smaller outer diameter (D1') compared with the outer diameter (D1) of the bearing pin (2a, 1b), wherein the one bearing pin (1a, 2a), together with the other bearing pin (1b, 2b), form a respective centring for the first and the second inner link plate (1, 2) and wherein the centring is a fit between the inner diameter (D2') of a bore having for instance the quality H7, and the outer diameter (D1') of a shaft having for instance the quality f8.

2. Endless clip chain according to claim 1, **characterised in that** the bearing pins (1a, 1b; 2a, 2b) of the first and second link plate (1, 2) form a respective pair of bearing pins of the same dimension.

3. Endless clip chain according to claim 1, **characterised in that** the bearing pins (1a, 1b; 2a, 2b) of the pairs of bearing pins have the same length (L).

4. Endless clip chain according to claim 1, **characterised in that** the bearing pins (1a, 1b; 2a, 2b) of the first and second link plate are bearing pins of unequal length (L1, L2).

5. Endless clip chain according to claim 1, **characterised in that** each inner link plate (1, 2) is a die-formed part.

6. Endless clip chain according to claim 1, **characterised in that** each inner link plate (1, 2) is a cast part.

## Revendications

1. Chaîne à pinces sans fin, en particulier pour des machines à étirer des films, constituée d'une série de plusieurs de pinces de serrage constituées d'une pièce de roulement (5) et d'au moins une pièce de serrage (Sa) reliée à la pièce de roulement (5), chaque pièce de roulement (5) formant une paire de maillons externes avec un premier et un deuxième tourillon de chaîne (6) se trouvant dans chaque pièce de roulement (5), avec au moins un coussinet (4) entourant chaque tourillon de chaîne (6) sur lequel des maillons internes (1, 2) sont disposés par paires, chaque maillon de chaîne étant constitué d'un premier maillon de chaîne interne (1) monobloc et d'un deuxième maillon de chaîne interne (2) monobloc, les deux maillons internes comportant chacun, à leurs extrémités, un axe tubulaire (1a, 1b ; 2a, 2b), les axes (1a, 1b) du premier maillon interne (1) étant reliés frontalement aux axes (2a, 2b) du deuxième maillon interne (2) et les axes tubulaires (1a, 1b ; 2a, 2b) du premier et du deuxième maillon interne (1, 2) recevant, sur leur pourtour extérieur, un coussinet (3) pour le logement avec liberté de rotation d'un cylindre (7), **caractérisée en ce qu'**un axe (1a) du premier maillon interne (1) et un axe (2b) du deuxième maillon interne (2) présente, au niveau de son extrémité libre, sur une longueur H, un diamètre intérieur (D2') supérieur au diamètre interne (D2) du trou traversant verticalement les axes (1a, 1b ; 2a, 2b) et **en ce que** l'autre axe (2a) du premier maillon interne (2) et l'autre axe (1b) du deuxième maillon interne (1) présente, au niveau de son extrémité libre, sur une longueur H, un diamètre extérieur (D1') inférieur au diamètre extérieur (D1) de l'axe (2a, 1b), l'axe (1a, 2a) avec l'autre axe (1b, 2b) formant un centrage pour le premier et le deuxième maillon interne (1, 2) et le centrage étant un ajustement dans lequel le diamètre intérieur (D2') étant un trou de qualité H7 et le diamètre extérieur (D1') un arbre de qualité f8.

2. Chaîne à pinces sans fin selon la revendication 1, **caractérisée en ce que** les axes (1a, 1b ; 2a, 2b) du premier et du deuxième maillon (1, 2) constituent une paire d'axes de mêmes dimensions.

3. Chaîne à pinces sans fin selon la revendication 1, **caractérisée en ce que** les axes (1a, 1b ; 2a, 2b) des paires d'axes ont une même longueur (L).

4. Chaîne à pinces sans fin selon la revendication 1, **caractérisée en ce que** les axes (1a, 1b ; 2a, 2b) du premier et du deuxième maillon sont des axes de longueur différente (L1, L2).

5. Chaîne à pinces sans fin selon la revendication 1, **caractérisée en ce que** chaque maillon interne (1, 2) est une pièce estampée.

6. Chaîne à pinces sans fin selon la revendication 1, **caractérisée en ce que** chaque maillon interne (1, 2) est une pièce moulée.
